# EUROPEAN PATENT APPLICATION

(11) **EP 1 234 523 A1**
(43) Date of publication of application: **28.08.2002**
(21) Application number: 01300804.0
(22) Date of filing: 30.01.2001
(51) Int. Cl.: A45F 5/00, H04B 1/38

(54) **Holder for a portabe electronic device**

(71) Applicant: Infinia Electronics Co. Ltd., Shijr, Taipei Hsien (TW)
(72) Inventor: Tang, Cheng-Tsai, Shijr, Taipei, Taiwan (TW)
(74) Representative: Woodward, John Calvin

(57) **Abstract**

A holder for a portable electronic device such as a mobile phone comprising a carrier 1 with a neck strap 3 connected thereto. A microphone 5 and an earphone 4 and are electrically connectable to a mobile phone 6 or other portable electronic device by means of an electrical connector 22 provided on a connector 2 at the base of a pocket 12 in which the phone is located. The pocket 12 has a strap 11 extending therefrom with a clip 13 at one end with male connectors 14 thereon which cooperate with female connectors 21 on the connector part 2 to retain the phone 6 in the pocket 12.

## Description

This invention relates to a holder for a portable electronic device which has a strap that the user can hang around his or her neck thereby providing a most convenient way of using and accessing an electronic device held therein.

The holder of the invention is especially suitable for use with mobile communication, data management and/or sound reproduction devices.

Mobile phones are generally used in circumstances which are not dangerous or inconvenient. However, there are several situations in which the user may need to use the phone in a hands-free mode, for instance when driving an automobile. A major disadvantage of such arrangements however is that the phone cannot then be used outside the automobile. In order to increase the popularity and variety of functions of modern mobile phones and other portable electronic devices, there is a need for a holder which is more convenient and easier to use.

The holder of the present invention is designed to solve the increasing needs of users of portable electronic devices.

According to the invention, there is provided a holder for a portable electronic device with operating controls comprising a neck strap attached to a carrier to releasably receive and retain a portable electronic device therein.

Preferably the carrier has one or more apertures therein to provide access to the operating controls of the portable electronic device.

In a preferred embodiment, the carrier includes a pocket into which the electronic device can be inserted and retaining means which can engage with the carrier to retain an electronic device in the pocket.

Preferably the retaining means is a strap with securing means thereon operable to releasably attach the strap to the carrier, the securing means comprising a male connector provided on the strap which releasably cooperates with a female connector on the carrier. In the preferred embodiment, the male connector is located at the free end of the strap whereas the female connector is located at the bottom of the carrier, for instance, on a connector attached thereto or vice versa.

The carrier is preferably made of a soft flexible material such as silicone rubber, PVC or polyurethane. Preferably the flexible material is transparent or translucent to allow the user to see through the holder and thereby read any displays which may be provided on the electronic device held therein.

The male and female connectors can take any convenient form which enables the strap to be releasably attached to the carrier. For instance, a Velcro connection can be used or alternatively metal or moulded plastic parts can be used which together provide a releasable connection.

At its simplest, the present invention provides a holder for a portable electronic device which has a strap connected thereto which the user can wear around his or her neck to suspend the device therefrom. However, the preferred embodiment of the invention includes a microphone which is connected to the carrier, the microphone having a plug located in the carrier which is arranged to be received in the appropriate socket on the electronic device when it is inserted therein. A control unit for the electronic device can also be connected to the carrier. Conveniently, the microphone and receiver are connected to the carrier via the control unit by a wire located inside the neck strap.

In the preferred embodiment, a receiver is also connected to the carrier and to the plug located therein. Conveniently the receiver is also connected to the control unit.

A preferred embodiment of the invention will now be described, by way of example only, with reference to the accompanying drawings, in which:
Figure 1 is a front view of a holder of the invention with a mobile phone supported therein and also including a microphone and headset;
Figure 2 is a rear view of the holder shown in Figure 1 prior to a mobile phone being inserted therein;
Figure 3 is a rear view of the holder shown in Figure 2 but after the mobile phone has been inserted therein and showing the securing strap partially folded over the phone; and

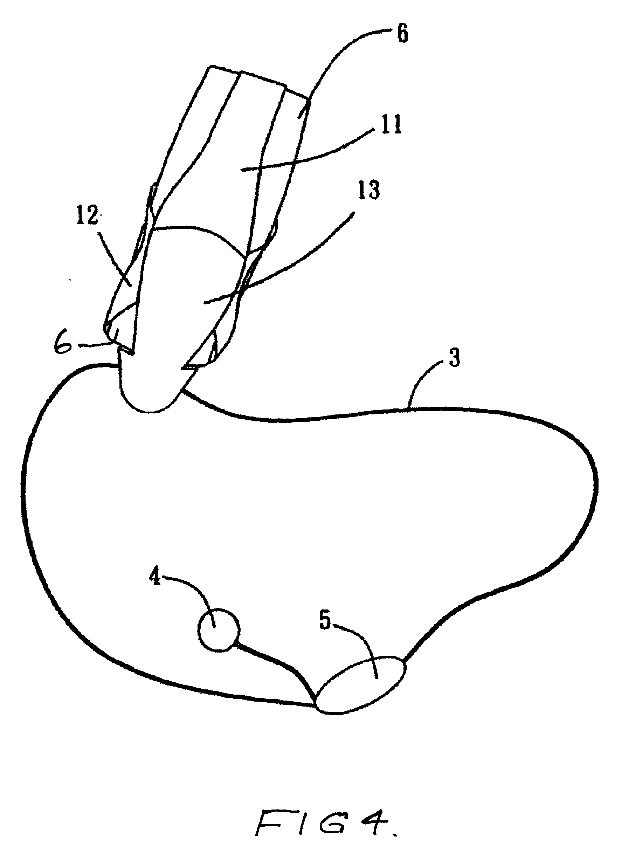

Figure 4 is a rear view of the holder shown in Figure 3 but with the securing strap fully folded over the mobile phone to retain it in the holder.

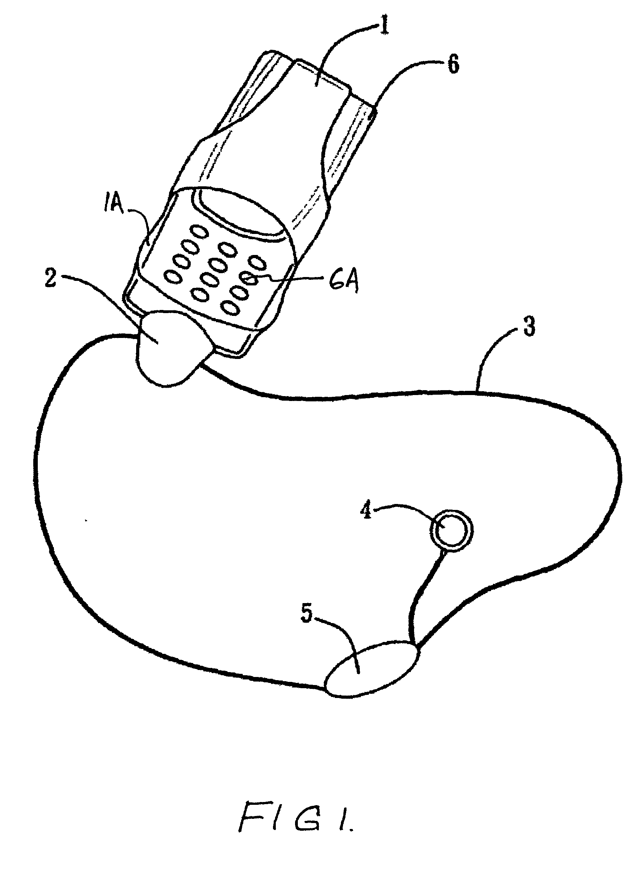

Referring now to the drawings, Figure 1 shows a preferred holder of the invention which comprises two basic components namely a carrier 1 and a neck strap 3. It also includes the optional sub-assemblies of a connector 2, a microphone 5 and a headset or earphone 4. Mobile phone 6 is retained in the carrier 1 and is electrically connected to microphone 5 and headset 4 by the connector 2 which will be described in more detail hereafter.

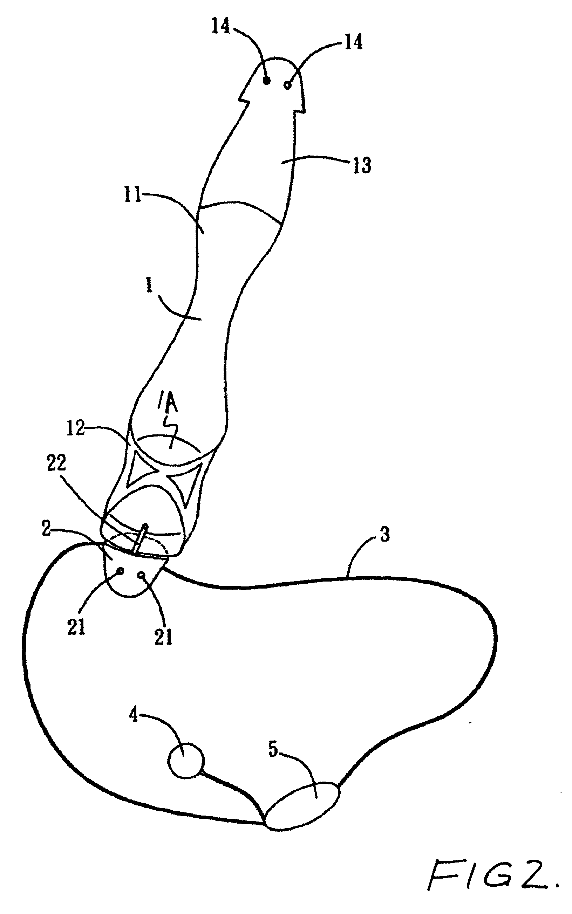

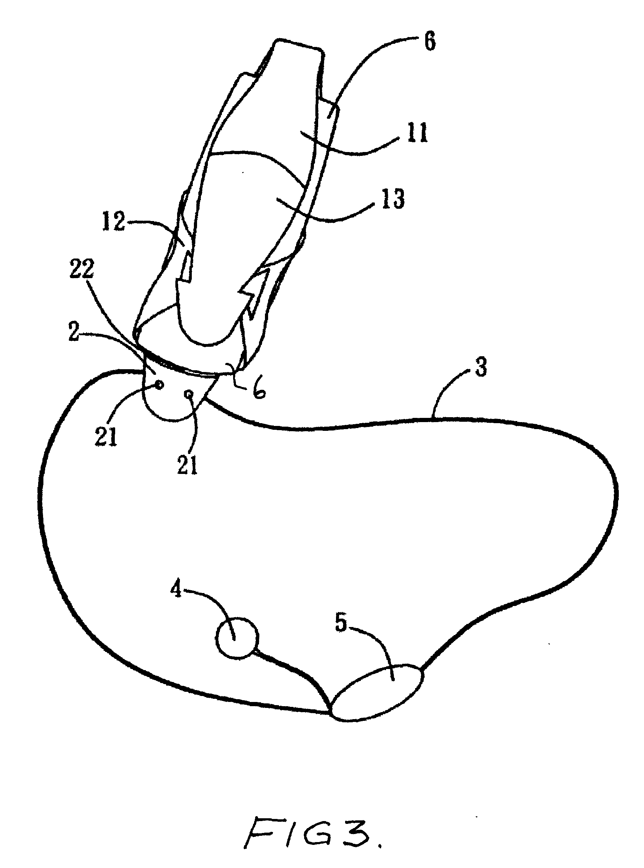

The carrier 1 is preferably made of a soft transparent or translucent material such as silicone rubber, PVC or polyurethane and is generally ribbon shaped as can be seen more clearly in Figure 2. A generally cylindrical pocket is formed on the rear of the carrier 1 by X-shaped portion 12 into which portable electronic devices such as a mobile phone can be placed, for instance as shown in Figure 3. The front carrier 1 is formed with a cut out or window 1A to provide the user with access to the operating controls of the portable device inserted therein, e.g. mobile phone keypad 6A as illustrated in Figures 1 and 3. The end of the carrier 1 remote from the X-shaped portion 12 is formed into a strap 11 having a clip 13 thereon with a pair of spaced male connector members 14 which cooperate with a pair of spaced female connectors 21 on the connector 2 to releasably attach the clip 13 to the connector 2.

Connector 2 is attached to the base of the carrier 1 adjacent the X-shaped pocket portion 12 and is provided with an electrical connector pin 22 shaped to fit into a suitable socket in a portable electronic device such as a mobile phone. The pin 22 makes an electrical connection with the mobile phone 6 so that electrical signals from the phone 6 are transmitted via a wire located inside the neck strap 3 to the headset 4 and the microphone 5. The connector 2 also includes the female connector parts 21 which receive the male connector parts 14. Preferably the male and female parts make a snap or press-fit connection. However, instead of the illustrated arrangement, the male connector can be a pin with an enlarged head which is releasably received in a keyhole shaped slot in known manner.

The neck strap 3 extends from both sides of the connector 2 and forms a loop which enables a portable electronic device to be hung around a user's neck, the electrical connection or wire for the headset 4 and the microphone 5 being fed through the interior of the strap to the connector 2 and pin 22 thereon.

When a user has installed a portable electronic device such as a mobile phone in the carrier 1 and has placed the headset 4 into his or her ear, the user can then move about freely without having to use his or her hands to hold the electronic device in order to talk or listen. The invention also places the portable electronic device on the users chest where it can readily be reached so it is extremely easy to use.

It should be noted that the holder of the invention has been described and illustrated in relation to holding a mobile phone in it. However, the concept can be applied to PDA (Personal Digital Assistant) MP3 players, radios, recording and playback devices, CD playback devices and any other portable electronic device of this type available now or in the future.

It should also be noted that at its simplest, the invention comprises a holder for a portable electronic device which has a neck strap attached thereto. The addition of a microphone, headset or earphone and the electrical connection between them using the pin 22 are only preferred.

To summarise, the illustrated preferred embodiment comprises a carrier 1 made of a soft see-through material. One side of the carrier is ribbon shaped and has a cut out window 14 in it to provide access to the operating controls 6A of the electronic device when inserted therein. The other side of the ribbon shaped part has a cylindrical shaped container or pocket 12 on it into which the portable electronic device 6 may be inserted. The ribbon side of the soft carrier terminates in a strap 11 which can be folded over a portable electronic device in the pocket to completely secure said device therein.

The holder of the invention preferably includes a connector 2 having a pin 22 which electrically connects a portable electronic device 6 inserted in the carrier 1 to a headset 4 and microphone 5 attached to the strap 3 so that the device can be used for voice communication in a hands-free manner.

## Claims

1. A holder for a portable electronic device with operating controls comprising a neck strap attached to a carrier to releasably receive and retain a portable electronic device therein.

2. A holder as claimed in claim 1 wherein the carrier has one or more apertures therein to provide access to the operating controls of the portable electronic device.

3. A holder as claimed in claim 1 or claim 2 wherein the carrier comprises a pocket into which the electronic device can be inserted and retaining means which can engage with the carrier to retain an electronic device in the pocket.

4. A holder as claimed in claim 3 wherein the retaining means is a strap with securing means thereon operable to releasably attach the strap to the carrier.

5. A holder as claimed in claim 4 wherein the securing means comprises a male connector provided on the strap which releasably cooperates with a female connector on the carrier or vice versa.

6. A holder as claimed in claim 5 wherein the strap has a free end on which the male connector is located.

7. A holder as claimed in claim 6 wherein the female connector is located at the bottom of the carrier.

8. A holder as claimed in any preceding claim wherein the carrier is made of a soft flexible material.

9. A holder as claimed in claim 8 wherein the soft flexible material is transparent or translucent.

10. A holder as claimed in claim 9 wherein the soft flexible material is silicon rubber, PVC or polyurethane.

11. A holder as claimed in claim 10 wherein the male and female connectors are made of a rigid plastics material.

12. A holder as claimed in any preceding claim wherein a microphone is connected to the carrier, the microphone having a plug located in the carrier arranged to be received the appropriate socket on an electronic device when inserted in the carrier.

13. A holder as claimed in claim 12 wherein the microphone is included in a control unit for the electronic device.

14. A holder as claimed in claim 12 or claim 13 wherein a receiver is connected to the carrier and to the plug located therein.

15. A holder as claimed in claim 14 wherein the receiver is connected to the carrier via the control unit.

16. A holder as claimed in any of claims 12-15 wherein the microphone, control unit and a receiver are all connected to the carrier by a wire located inside the neck strap.
